(19) Europäisches Patentamt / European Patent Office / Office européen des brevets

(11) **EP 4 166 990 A1**

(12) **EUROPEAN PATENT APPLICATION**

(43) Date of publication:
**19.04.2023 Bulletin 2023/16**

(21) Application number: **21202395.6**

(22) Date of filing: **13.10.2021**

(51) International Patent Classification (IPC):
**G01S 19/39** $^{(2010.01)}$

(52) Cooperative Patent Classification (CPC):
**G01S 19/396**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Trimble Inc.**
**Sunnyvale, CA 94085 (US)**

(72) Inventor: **El Khayat, Ramzi**
**Munich (DE)**

(74) Representative: **Hoffmann Eitle**
**Patent- und Rechtsanwälte PartmbB**
**Arabellastraße 30**
**81925 München (DE)**

Remarks:
Amended claims in accordance with Rule 137(2) EPC.

(54) **METHODS AND SYSTEMS FOR ESTIMATING AN EXPECTED ACCURACY USING NAVIGATION SATELLITE SYSTEM OBSERVATIONS**

(57) Some embodiments of the invention relate to methods carried out by an NSS receiver and/or a processing entity capable of receiving data therefrom, for estimating parameters derived from NSS signals useful to determine a position, and for estimating an expected accuracy. The method comprises receiving (s10) input data comprising NSS signals observed by the NSS receiver and/or information derived from said NSS signals; operating (s20) an estimation process, hereinafter referred to as "estimator", using state variables and computing the values of its state variables based on the received input data; obtaining (s30) a combination of residuals from the estimator, each residual being associated with at least one observed NSS signal; and estimating (s40) an expected accuracy based on the combination of residuals and/or information derived therefrom. Systems and computer programs are also disclosed. Some embodiments may for example be used for safety-critical applications such as highly automated and autonomous driving.

s10 — receiving input data

s20 — operating estimator

s30 — obtaining residuals

s40 — estimating expected accuracy

Fig. 1

EP 4 166 990 A1

**Description**

**[Field of technology]**

The invention relates to methods, systems, and computer programs for estimating an expected accuracy when using navigation satellite system (NSS) observations. The fields of application of the methods, systems, and computer programs include, but are not limited to, navigation, highly automated driving, autonomous driving, mapmaking, land surveying, civil engineering, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), and the Indian Regional Navigational Satellite System (IRNSS, also referred to as NAVIC) (systems in use or in development). An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.
An overview of GPS, GLONASS and Galileo is provided for instance in sections 9, 10 and 11 of reference [1] (a list of references is provided at the end of the present description).
Positioning using NSS signal codes provides a limited accuracy, notably due to the distortion the code is subject to upon transmission through the atmosphere. For instance, the GPS includes the transmission of a coarse/acquisition (C/A) code at about 1575 MHz, the so-called L1 frequency. This code is freely available to the public, whereas the Precise (P) code is reserved for military applications. The accuracy of code-based positioning using the GPS C/A code is approximately 15 meters, when taking into account both the electronic uncertainty associated with the detection of the C/A code (electronic detection of the time of arrival of the pseudorandom code) and other errors including those caused by ionospheric and tropospheric effects, ephemeris errors, satellite clock errors, and multipath propagation.
An alternative to positioning based on the detection of a code is positioning based on carrier phase measurements. In this alternative approach or additional approach (ranging codes and carrier phases can be used together for positioning), the carrier phase of the NSS signal transmitted from the NSS satellite is detected, not (or not only) the code modulated on the signal transmitted from the satellite.
The approach based on carrier phase measurements has the potential to provide much greater position precision, i.e. down to centimetre-level or even millimetre-level precision, compared to the code-based approach. The reason may be intuitively understood as follows. The code, such as the GPS C/A code on the L1 band, has an effective chip length that is much longer than one cycle of the carrier on which the code is modulated, when converted to units of distance. The position resolution may therefore be viewed as greater for carrier phase detection than for code detection.
However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem" or "phase ambiguity resolution problem", which may be solved to yield the so-called fixed solution.
GNSS observation equations for code observations and for carrier phase observations are for instance provided in reference [1], section 5. An introduction to the GNSS integer ambiguity resolution problem, and its conventional solutions, is provided in reference [1], section 7.2. The skilled person in the art will recognize that the same or similar principles apply to RNSS systems.
The main GNSS observables are therefore the carrier phase and code (pseudorange), the former being generally much more precise than the latter, but ambiguous. These observables enable a user to obtain the geometric distance from the receiver to the satellite. With known satellite position and satellite clock error, the receiver position and receiver clock error can be estimated.
As mentioned above, the GPS includes the transmission of a C/A code at about 1575 MHz, the so-called L1 frequency. More precisely, each GPS satellite transmits continuously using two radio frequencies in the L-band, referred to as L1 and L2, at respective frequencies of 1575.42 MHz and 1227.60 MHz. With the ongoing modernization of the GPS, signals on a third L5 frequency are becoming available. Among the two signals transmitted on L1, one is for civil users and the other is for users authorized by the United States Department of Defense (DoD). Signals are also transmitted on L2, for civil users and DoD-authorized users. Each GPS signal at the L1 and L2 frequencies is modulated with a pseudo-random number (PRN) code, and optionally with satellite navigation data. When GNSS satellites broadcast signals that do not contain navigation data, these signals are sometimes termed "pilot" signals, or "data-free" signals." In relation to GPS, two different PRN codes are transmitted by each satellite: a C/A code and a P code which is encrypted for DoD-authorized users to become a Y code. Each C/A code is a unique sequence of 1023 bits, which is repeated each millisecond. Other NSS systems also have satellites transmitting multiple signals on multiple carrier frequencies.

For some applications relying on the above-discussed techniques, the estimation of an expected accuracy may be desirable for example to indicate a level of trust that may be placed in the values of parameters estimated using these techniques. Such estimated accuracy information may assist applications in deciding whether estimated parameter values can be trusted and are thus safe to use or, on the contrary, they cannot be trusted and may be unsafe to use.

There is a constant need for improving the implementation of positioning or similar systems making use of NSS measurements, and, in particular, for being able to reliably provide an estimate of the expected accuracy of these systems, especially, but not only, in the context of safety-critical applications such as highly-automated driving and autonomous driving, where such requirements are sometimes referred to as GNSS functional safety.

**[Summary]**

The present invention aims at addressing the above-mentioned need. The invention includes methods, systems, computer programs, computer program products and storage mediums as defined in the independent claims. Particular embodiments are defined in the dependent claims.

In one embodiment, a method is carried out by at least one of: an NSS receiver, and a processing entity capable of receiving data from the NSS receiver, for estimating parameters derived from NSS signals useful to, i.e. suitable to, determine a position. The NSS receiver observes an NSS signal from each of a plurality of NSS satellites over multiple epochs. The method comprises the following steps or operations. Input data is received, which comprises at least one of: NSS signals observed by the NSS receiver, and information derived from said NSS signals. An estimation process, hereinafter referred to as "estimator", is operated, wherein the estimator uses state variables and computes the values of its state variables at least based on the received input data. Residuals are obtained from the estimator, with each residual being associated with at least one NSS signal observed by the NSS receiver. More specifically, first residuals, hereinafter referred to as "precise-observations residuals", and second residuals, hereinafter referred to as "less-precise-observations residuals", are obtained from the estimator, wherein the precise-observations residuals comprise at least one of: carrier phase observation residuals, delta carrier phase observation residuals (note: the term "delta phase" or "delta-phase" is sometimes used in the art as a shortened form for "delta carrier phase"), and Doppler observation residuals; and the less-precise-observations residuals comprise at least one of: code observation residuals and delta code observation residuals. An expected accuracy of a position and/or a velocity is estimated based on at least one of: (i) a combination of at least some of the obtained precise-observations residuals and at least some of the obtained less-precise-observations residuals and (ii) information derived from a combination of at least some of the obtained precise-observations residuals and at least some of the obtained less-precise-observations residuals.

The method allows the generation of an expected accuracy without being dependent on *a priori* noise models. That is, the method enables the provision of a generally reliable expected accuracy value without having to rely on assumptions as to the noise models to which observed NSS signals adhere. By doing away with the need to provide an *a priori* noise model for each NSS observation, the method is typically simpler than prior art methods in terms of implementation. Moreover, the reliability of the expected accuracy estimated by the method is typically higher than if it relied on *a priori* noise models (which may for example include uncorrelated white noise models and/or correlated noise models) not accounting for biases in the NSS observations.

The invention also relates, in one embodiment, to a system comprising at least one of: a NSS receiver, and a processing entity capable of receiving data from the NSS receiver, the system being for estimating parameters useful to, i.e. suitable to, determine a position, the NSS receiver being configured for observing a NSS signal from each of a plurality of NSS satellites over multiple epochs, and the system being configured for carrying out the above-described method.

The invention also relates, in some embodiments, to computer programs, computer program products, and storage mediums for storing such computer programs, comprising computer-executable instructions for carrying out, when executed on a computer such as one embedded in a NSS receiver or in another apparatus, or when executed on a set of computers such as a set of computers embedded in a set of apparatuses, the above-described method.

**[Brief description of the drawings]**

Embodiments of the present invention shall now be described in conjunction with the appended drawings in which:

Fig. 1 is a flowchart of a method in one embodiment of the invention;

Fig. 2a is a flowchart of a method in one embodiment of the invention, further comprising observing NSS signals;

Fig. 2b is a flowchart of a method in one embodiment of the invention, wherein input data is received by a processing entity from an NSS receiver;

Fig. 3 is a flowchart of a method in one embodiment of the invention, further comprising scaling residuals;

Fig. 3a schematically illustrates a neural network that may be used in one embodiment of the invention;

Fig. 4 is a flowchart of a method in one embodiment of the invention, further comprising smoothing residuals after scaling residuals;

Fig. 5 is a flowchart of a method in one embodiment of the invention, comprising smoothing residuals before scaling residuals;

Fig. 6 is a flowchart of a method in one embodiment of the invention, comprising computing a scale factor;

Fig. 7 is a flowchart of a method in one embodiment of the invention, further comprising determining whether to adjust the covariance matrix of the estimator;

Fig. 8 schematically illustrates a system including a covariance manager, also referred to as "variance manager", in one embodiment of the invention;

Fig. 8a schematically illustrates an exemplary buffer to store derived values of interest, in one embodiment of the invention;

Fig. 8b is a flowchart of a decision process in one embodiment of the invention, as a possible implementation of determining step s60;

Fig. 9 is a flowchart of a procedure for acquiring residuals, variances, and the epoch time, in one embodiment of the invention;

Fig. 10 is a mapping function for mapping a variance value to a scaling value for scaling a residual in one embodiment of the invention;

Fig. 11 shows degrees of freedom as a function of a number of used residuals in one embodiment of the invention; and

Fig. 12 schematically illustrates a system in one embodiment of the invention.

**[Detailed description]**

The present invention shall now be described in conjunction with specific embodiments. These serve to provide the skilled person with a better understanding but are not intended to in any way restrict the scope of the invention, which is defined by appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced by "RNSS" to form additional embodiments.

When the term "real-time" is used in the present document, it means that there is an action (e.g., data is processed, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

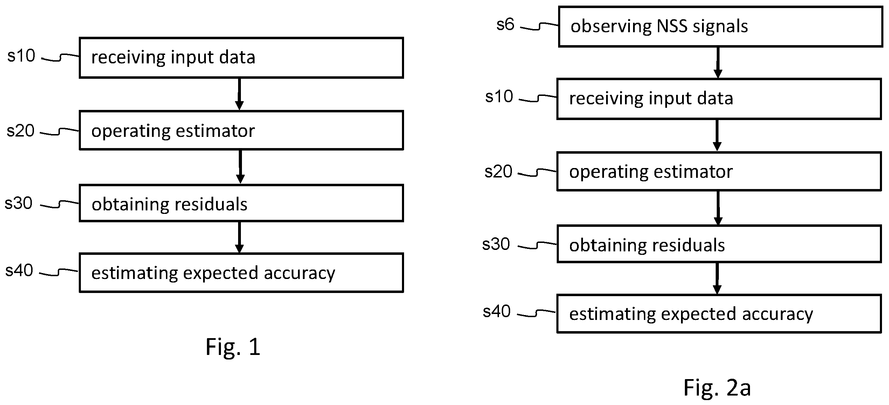

Fig. 1 is a flowchart of a method in one embodiment of the invention. The method may be carried out by a NSS receiver configured for observing NSS signals from a plurality of NSS satellites over multiple epochs, by another processing entity capable of receiving data from the NSS receiver, or by an NSS receiver in conjunction with such other processing entity. The processing entity may be remotely located from the NSS receiver and may receive data representing the NSS observations from the NSS receiver.

In one embodiment, the method aims at estimating parameters derived from NSS signals useful to, i.e. suitable to, determine a position, such as the position of a rover receiver or reference station, and at estimating an expected accuracy of a solution that relies on NSS observations to produce an estimate of said parameters or a combination thereof. The method may eventually lead to estimating a rover position or reference station position, in addition to estimating an expected accuracy associated with said solution.

The estimated parameters may for example indicate the most probable number of carrier cycles along the distance separating an NSS satellite from the NSS receiver, i.e. the estimated parameters may be the resolved integer ambiguity. This also means that the method may estimate the position itself but not necessarily: parameters may be estimated that may be used, for example by another entity (such as a processing entity on a server dedicated to such task), to estimate or determine the position of the NSS receiver (i.e., the rover position) or of a reference station. Furthermore, other parameters such as, for example, properties of the ionosphere may be estimated. Indeed, if the position of both the NSS receiver and the plurality of NSS satellites are known, resolving the integer ambiguities may enable the determination of parameters affecting the transmission of the signals (or some components thereof) through the ionosphere or other parts of the atmosphere. Doing so is useful for example for generating a correction stream to be broadcasted to users (see e.g. references [2] and [3]).

Yet furthermore, beyond determining the position of a rover or a reference station, if the position of NSS receivers (such as reference stations) is known, solving the integer ambiguities in the carrier phases by solving observation equations may also be used to eventually estimate the position of a satellite.

The invention is, however, not limited to solving the integer ambiguities in the carrier phases. In some embodiments, pseudorange code observations are used rather than, or in addition to, carrier phase observations.

The application relying on NSS observations to produce an estimate of said parameters, or a combination thereof, may for example be a highly automated driving or autonomous driving application relying on NSS observations to produce an estimate of the position, velocity, or acceleration of a vehicle. The method may for example estimate an expected accuracy to enable the application to determine the extent to which a position solution computed based on the NSS observations can be trusted.

In step s10, input data is received, which comprises at least one of: NSS signals observed by the NSS receiver, and information derived from said NSS signals.

In step s20, an estimation process, hereinafter referred to as "estimator", is operated. The estimator uses state variables and computes the values of its state variables at least based on the received input data. In one embodiment, the estimator computes a float solution using NSS signals observed by the NSS receiver. The float solution comprises the float solution per se and its associated covariance matrix. Exemplary ways to compute a float solution are known in the art, as apparent for example from section H.3.1 of reference [4].

The estimator is or comprises an algorithm, procedure, or process, or a piece of software and/or hardware configured for implementing such an algorithm, procedure, or process, in which a set of state variables (or "state vector") are maintained over time, i.e. the values of the state variables are estimated based on a series of measurements made over time. The series of measurements may comprise the observed NSS signals. Step s20 may involve, for example, a Kalman filter, a least squares estimator, and/or a robust estimator. The invention is, however, not limited to the use of Kalman filter(s), least squares estimator(s), and/or robust estimator(s). Other estimation processes, filters, or filter techniques may be used.

The estimator's state variables may represent, for example, the position of the NSS receiver, an offset in the position of the NSS receiver relative to another position, an offset in the position of the NSS receiver relative to another epoch, the rate of change of the position, the rate of change of the offset in the position, a bias related to the NSS receiver, a bias related to any of the NSS satellites, a bias related to any of the satellite systems, a bias related to any of the NSS signals, and the rate of change of any of the said biases.

In step s30, residuals are obtained from the estimator, each residual being associated with at least one NSS signal observed by the NSS receiver. As known in the art, the residual of an NSS signal is the difference between the observed (measured) NSS signal and the estimated (predicted) NSS signal. More specifically, in step s30, first residuals, referred to as "precise-observations residuals", and second residuals, referred to as "less-precise-observations residuals", are obtained from the estimator, wherein the precise-observations residuals comprise at least one of: carrier phase observation residuals, delta carrier phase observation residuals ("delta carrier phase observation" means time-differenced carrier phase observations), and Doppler observation residuals; and the less-precise-observations residuals comprise at least one of: code observation residuals and delta code observation residuals.

In one embodiment, post-fit residuals, also called *a posteriori* residuals, are obtained in step s30. The post-fit residual of an NSS signal is the difference between the observed (measured) NSS signal at time t and the estimated (predicted) NSS signal based on information available until and including time t and after updating the states of the estimator.

In another embodiment, pre-fit residuals, also called innovations or *a priori* residuals, are obtained in step s30. The pre-fit residual of an NSS signal is the difference between the observed (measured) NSS signal at time t and the estimated (predicted) NSS signal based on information available until and including time t but before updating the states of the estimator. In other words, pre-fit residuals are the difference between a signal and the estimated signal obtained from a dynamic model. If, for example, there is a high confidence in the dynamic model, the pre-fit residuals may be used as they might absorb observation biases leading to a large estimated accuracy value that can reflect a possible skew in the state estimation values obtained after the observation update. If, however, the dynamic model is not well suited for the application, the pre-fit residuals may have large values resulting in an over-pessimistic accuracy estimate.

In one embodiment, the combination of precise-observations residuals and less-precise-observations residuals that is used depend on those residuals obtainable from the estimator. In one embodiment, the estimator uses code observations and delta carrier phase observations and the residuals that are obtained from the estimator (in step s30) are code observation residuals (as less-precise-observations residuals) and delta carrier phase observation residuals (as precise-observations residuals). The code observations provide the position estimate and the delta carrier phase observations provide a smooth and precise estimation. Analogously, the code observation residuals provide an estimation of the expected accuracy and the delta carrier phase observation residuals are used to obtain a smoothed out expected accuracy.

In step s40, an expected accuracy of a position and/or a velocity is estimated based on at least one of: (i) a combination of at least some of the obtained precise-observations residuals and of at least some of the obtained less-precise-observations residuals, and (ii) information derived from a combination of at least some of the obtained precise-observations residuals and of at least some of the obtained less-precise-observations residuals. As mentioned above, in one embodiment, post-fit residuals outputted by the estimator are used, while, in another embodiment, pre-fit residuals outputted by the estimator are used. The estimated expected accuracy is a value indicating how close an estimated position or velocity is expected to be from the true position or velocity, respectively. The estimated position or velocity is derived from the values of the state variables of the estimator or, in other words, from the solution provided by the estimator. In other words, the estimated expected accuracy may be regarded as constituting an expected positioning error, i.e. position-related error, computed based on the estimator's residuals or some of them. The estimated expected accuracy of a position may for example be expressed in any suitable unit of distance (e.g., in millimetres). Likewise, the estimated expected accuracy of a velocity may be expressed in any suitable way (to represent e.g. a speed and direction). The expected accuracy is estimated without being dependent on *a priori* noise models, thus allowing simple implementations that are typically resistant to biases in the NSS observations. In turn, simple implementations allow for less computer resource intensive implementations.

Using precise-observations residuals combined with less-precise-observations residuals to determine an expected accuracy of a position and/or a velocity is advantageous at least for the following reasons: The less-precise observations (i.e., the code observations and/or delta code observations, in line with the above definition of the phrase "less-precise observations") have low precision, may be subject to multipath errors, but deliver unambiguous range, whereas the precise observations (i.e., the carrier phase observation residuals, delta carrier phase observation residuals, and/or Doppler observation residuals, in line with the above definition of the phrase "precise observations") yield very precise position (or velocity) estimates but are ambiguous.

This means that, for example, the delta carrier phase measurements (i.e., the delta carrier phase observations) may effectively smooth the code measurements (i.e., the code observations) and hence the residuals from code and delta-carrier-phase can be integrated together to determine the overall expected accuracy of the final reported position. The ability to perform an effective smoothing process is also closely related to the way in which delta-carrier-phase and code measurements are used to estimate position. Delta-carrier-phase measurements yield a tight constraint on the epoch-to-epoch position estimates. Code measurements produce position estimates that are noisy. It is the integration of the two measurement sources that effectively smooths the position estimates overall. Similar considerations apply to other combinations of precise-observations residuals with less-precise-observations residuals.

In one embodiment, the estimator not only computes values of its state variables but also outputs a covariance matrix representing the uncertainty in these values of the state variables. In this embodiment, the expected accuracy estimated in step s40 may eventually be used to adjust the covariance matrix of the estimator (not illustrated in Fig. 1), i.e. to scale diagonal elements of the covariance matrix.

Although scaling a solution's covariance matrix is known in the art (see reference [4], paragraphs [0057], [0061], [0063], disclosing the scaling of a float solution's covariance matrix by multiplying it by the variance of unit weight, and adjusting the error norm), changing the covariance matrix of the estimator using an expected accuracy estimated based on a combination of precise-observations residuals with less-precise-observations residuals and/or information derived from said combination is not known in the art.

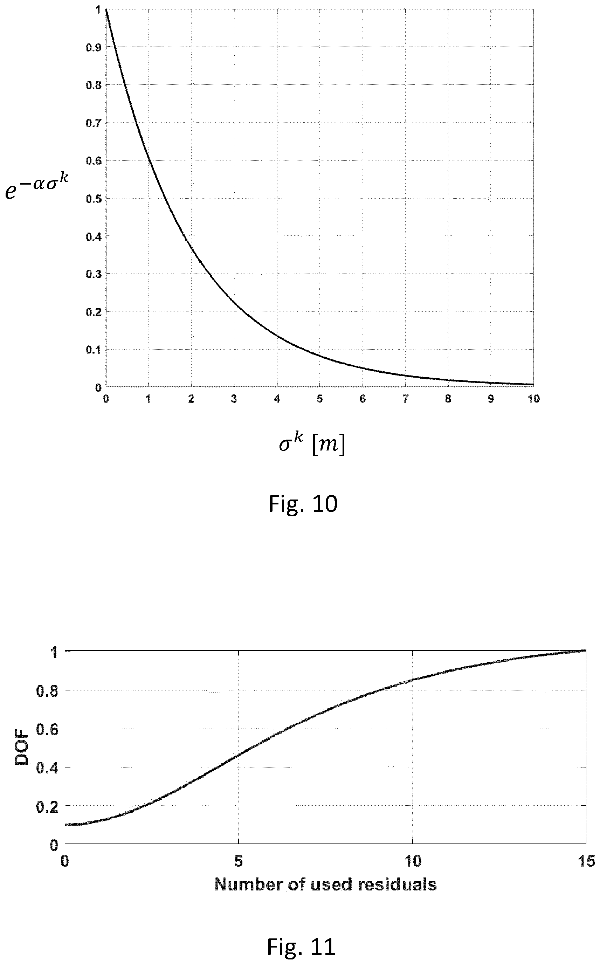

In one embodiment, estimating s40 the expected accuracy comprises applying a non-linear mapping function to a linear combination of at least some of the obtained precise-observations residuals and at least some of the obtained less-precise-observations residuals, the mapping function being a function of the number of used residuals. An example of such a mapping function is illustrated in Fig. 11. In one embodiment, the mapping function is obtained empirically. In a sub-embodiment, the mapping function is obtained empirically by taking at least the following two requirements into account: (1) producing a very small value that is larger than 0 (zero) if the number of residuals is zero, and (2) producing a value that is smaller than 1 if the number of used residuals is equal to the number of estimator states. Various mapping functions may therefore be used, as a skilled person would understand.

In one embodiment, the expected accuracy is an expected positioning (i.e., position and/or velocity) accuracy of a navigation solution produced by the estimator. In a sub-embodiment, the expected accuracy is an expected horizontal error on or near the Earth surface, i.e. an expected two-dimensional horizontal error. The horizontal error may be given in a local horizontal plane (e.g., a reference plane defined at the user's location). Knowing an expected horizontal error may be of particular interest for automotive applications where the expected horizontal error can optionally be projected into an expected cross-track error. In another sub-embodiment, the expected accuracy is an expected vertical error on or near the Earth surface, i.e. an expected one-dimensional vertical error. Knowing an expected vertical error may be of interest for aircraft and/or unmanned aerial vehicle applications. In yet another sub-embodiment, the expected accuracy is an expected three-dimensional error on or near the Earth surface, wherein the three-dimensional error may for example be given in a local reference plane. The expected positioning accuracy may eventually be provided to the end user, an automatic control system, and/or may be used for triggering an alarm indicating a possible degradation in the expected accuracy of the positioning solution or the like.

Exemplary ways of carrying out step s40 are further explained below notably in section B.10 described with reference to Fig. 11.

Fig. 1 schematically illustrates the operations of the method as sequential steps s10 to s40. For processing NSS observations relating to one receiver epoch, the steps may be performed sequentially. However, the operations of the method may also be carried out in parallel, for example for successive receiver epochs, thus continuously, or at least at regular or irregular intervals, estimating expected accuracy or accuracies relating to one or more receiver epochs.

In one embodiment, the expected accuracy or accuracies, or some of them, are generated at the receiver epoch rate. In another embodiment, the expected accuracy or accuracies, or some of them, are generated at a lower rate than the receiver epoch rate. In one embodiment, the expected accuracy or accuracies are updated when a new set of measurements are used to update the positioning solution, and/or when the positioning solution is propagated using the estimator (regarding the meaning of "estimator" here, see above discussion of step s20).

Fig. 2a is a flowchart of a method in one embodiment of the invention, further comprising a step s6 of observing NSS signals. That is, in this embodiment, steps s10 to s40 are carried out at least by an NSS receiver, and the NSS receiver also carries out step s6 of observing NSS signals.

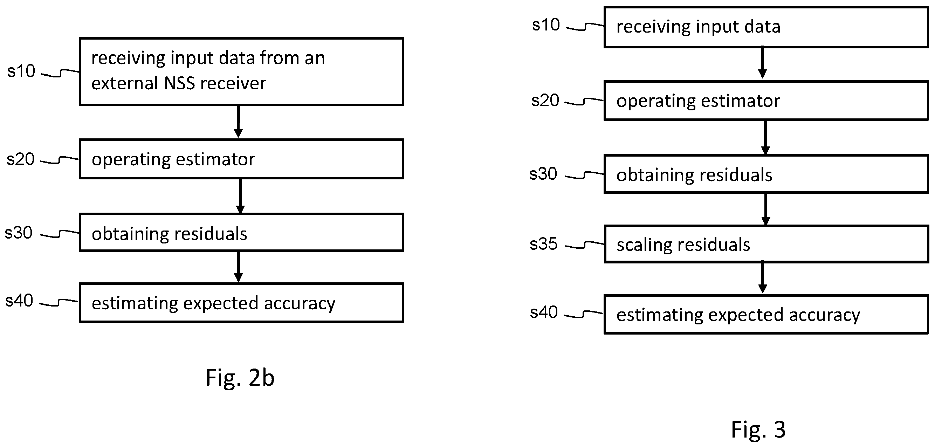

Fig. 2b is a flowchart of a method in another embodiment of the invention, wherein an NSS receiver observes NSS signals (not illustrated in Fig. 2b) and, then, in contrast to Fig. 2a, the NSS receiver transmits data representing the observed NSS signals to another processing entity or set of processing entities in charge of carrying out steps s10 to s40. The data representing the observed NSS signals may for example be transmitted in the form of data packets, such as IP packets, through, for example, any one of, or a combination of, the Internet, a cellular network, and a satellite link (e.g. using the L-band). In one embodiment, the data representing the observed NSS signals is transmitted in real-time, i.e. as soon as available (in line with the above-mentioned definition of the term "real-time"). In one embodiment, the data representing the observed NSS signals is transmitted as a data stream in that messages containing said data are transmitted at regular or irregular intervals through the same communication medium or channel. The data representing the observed NSS signals may be encoded and/or encrypted prior to transmission.

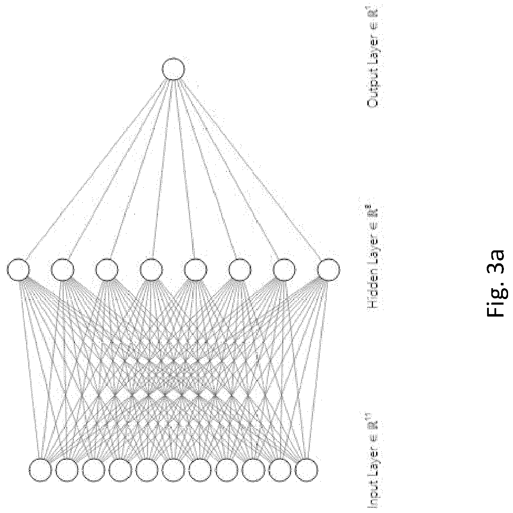

Fig. 3 is a flowchart of a method in one embodiment of the invention, wherein, after obtaining the residuals (step s30) and before estimating the expected accuracy (step s40), the residuals or some of them are scaled s35. Namely, for each of at least some of the obtained residuals, the residual is scaled based on a stochastic model, the stochastic model applying to the at least one NSS signal with which the residual is associated. Estimating s40 the expected accuracy then comprises estimating the expected accuracy based on at least one of: the scaled residuals and information derived from the scaled residuals. The term "stochastic model", which is known in the art, refers to a mathematical model representing the expected or assumed value of the error in a measurement over time, the measurement being here the observed NSS signal. Methods to determine a suitable stochastic model are known in the art (see for example references [8] to [11]). An exemplary implementation of step s35 is further explained in section B.8 below.

The embodiment illustrated by Fig. 3 generally provides an expected accuracy estimate which, compared to an embodiment in which no scaling is performed, better reflects the quality of the positioning solution outputted by the estimator. The reasons may be explained as follows (by way of a non-limiting example): Let's assume that an exemplary stochastic model depending on the satellite elevation is used. Let's further assume that two of the NSS satellites, referred to as satellites K1 and K2, have an elevation of 15 and 45 degrees respectively. The residuals corresponding to some code observations from satellites K1 and K2 may then be for example equal to 20 meters and 5 meters respectively. The code observations from satellite K2 are more trustworthy than those from satellite K1, given the elevation difference. If the satellite elevation were not taken into consideration, and if the residuals were not scaled, the expected accuracy estimate would be pessimistic. Scaling down the value of the residuals associated with code observations from satellite K1 reflects the fact that the value is less reliable given the low elevation of satellite K1. Thus, the scaling provides an expected accuracy estimate that is more likely to better reflect the quality of the positioning solution.

Scaling the residuals is optional. In one embodiment, instead of scaling the residuals, a neural network is used to adjust the residuals or some of them.

Here are steps that may be carried out, in an exemplary embodiment, for implementing a neural network that uses observation residuals to estimate the expected positioning accuracy:

> Step 1: Collect the data and divide it into two sets: (1) one set for training (set1), and (2) one set for testing (set2). For the sake of simplicity, only code residuals may be used and the satellite elevations may be relied on as indicator of the quality of the residuals. The data may be composed, therefore, of a vector of residuals at each epoch, the elevation of the satellite associated with each residual, and the true horizontal (or vertical) position error to be used for training in set1 and for validation and testing in set2.
>
> Step 2: Clean the data by rejecting residuals above a threshold and/or residuals associated with satellites having an elevation smaller than 10 degrees (as an example).

Step 3: Standardize the data by dividing each residual by $\left(\dfrac{1}{\sin(elevation)}\right)^2$

Step 4: Choose a neural network model and train it. For the sake of simplicity, the input vector at each epoch t may be assumed to be constant. This assumes that the observed satellites are not changing in the duration of the dataset. An exemplary neural network selected in step 4 is schematically illustrated by Fig. 3a.

The exemplary neural network schematically illustrated by Fig. 3a has 11 input neurons. Each of the first 10 neurons is associated with a satellite and takes as input the residual of the observation from that satellite divided by the above-mentioned elevation function. The eleventh neuron takes as input the output of the neural network at epoch t-1.

The network has one hidden layer of 8 neurons and one output layer of one neuron. The number of hidden neurons and hidden layers may be empirically determined as part of a suitable tuning process. The output neuron produces the expected accuracy at a given epoch t.

The neural network assigns a weight to each neuron. During the training process, the network adjusts the weight of each neuron to minimize the error which is the difference between the output neuron and the truth. Such a process is described for example in reference [7], pp. 289-291, from which a skilled person would be able to implement a suitable neural network to estimate the expected positioning accuracy. Other neural network implementations may be used.

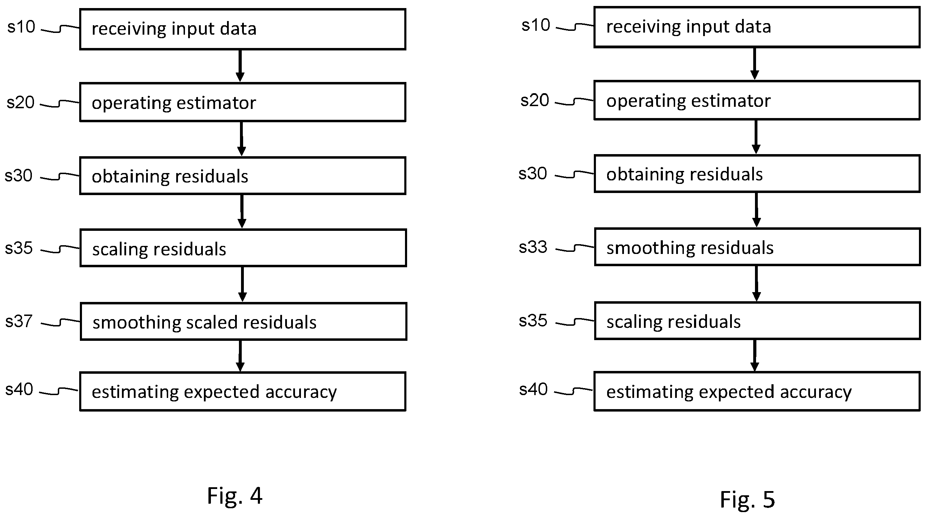

Fig. 4 is a flowchart of a method in one embodiment of the invention, the method further comprising a step s37 of smoothing residuals in time after scaling s35 them and before estimating s40 the expected accuracy. In particular, the method may comprise, in this embodiment, obtaining s30 less-precise-observation residuals (such as for example code observation residuals) from the estimator, scaling s35 them using the corresponding observation variances and smoothing s37 them using precise-observation residuals (such as for example delta carrier phase observation residuals) in order to estimate s40 the expected accuracy. The precise-observation residuals (such as for example the delta carrier phase observation residuals) are much smaller than the less-precise-observation residuals (such as for example the code observation residuals) given the low noise of the carrier phase observations themselves, so that the precise-observation residuals (e.g. the delta carrier phase observation residuals) may for example be used for smoothing. An exemplary implementation of step s37 is further explained in section B.9 below.

More generally, smoothing may be carried out in various ways, such as, for example, using one type of residuals alone or, alternatively, using another type of residuals. In one embodiment, one type of residuals is smoothed on its own using a smoothing technique such as, for example, a moving average technique. In one embodiment, residuals stemming from code observations (the so-called "less-precise-observations" residuals) are smoothed using carrier phase observation residuals, delta carrier phase observation residuals, or Doppler observation residuals (the so-called "precise-observations" residuals).

Smoothing generally provides an expected accuracy estimate that is less noisy. In other words, smoothing produces expected accuracies that do not excessively fluctuate with short-term variations in measurement errors. Overall, the residual smoothing process helps produce more faithful estimates of expected accuracies by averaging the overall residual errors.

Fig. 5 is a flowchart of a method in one embodiment of the invention, the method further comprising a step s33 of smoothing residuals in time before scaling s35 them. An exemplary implementation of step s33 is further explained in section B.9 below.

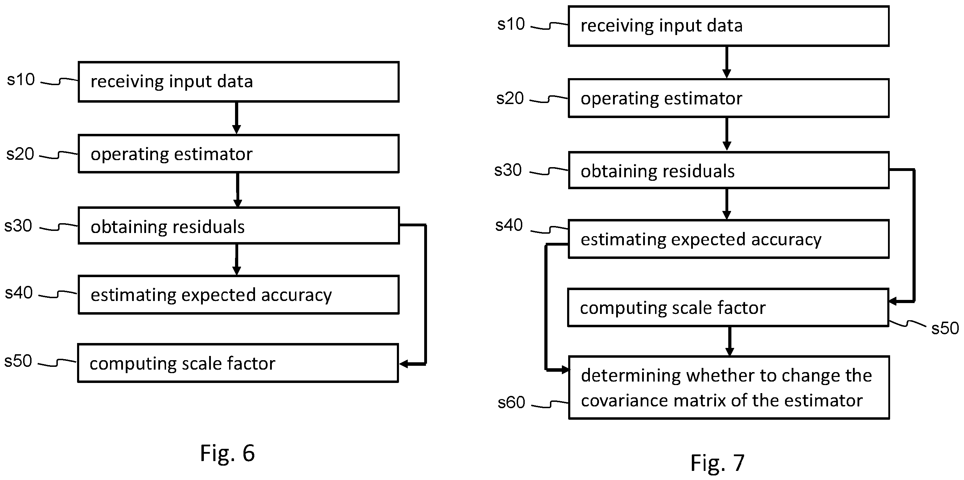

Fig. 6 is a flowchart of a method in one embodiment of the invention, comprising a step s50 of computing a scale factor based on at least one of: the residuals and information derived from the residuals. The scale factor may then be used for example in the embodiment described with reference to Fig. 7 (i.e., in the decision process of that embodiment). In other words, the scale factor may be used in the process of deciding whether to scale the covariance matrix. The scale factor may, alternatively, be used for various other purposes. Exemplary implementations of step s50 are further explained in sections B.5 and B.12 below.

Fig. 7 is a flowchart of a method in one embodiment of the invention, further comprising a step of determining whether to change the covariance matrix of the estimator. Namely, in that embodiment, the estimator outputs, at each epoch, a covariance matrix, and the method further comprises determining s60 whether to adjust the covariance matrix of the estimator using a decision procedure taking the estimated expected accuracy and the computed scale factor as input. An exemplary implementation of step s60 is further explained in section B.6 below.

The embodiment illustrated by Fig. 7 may be useful in various situations, such as for example in a situation in which the number of used residuals is low (situation (1)) and/or after the estimator is reset (situation (2)). In such exemplary situations, it may be desirable to refrain from adjusting the covariance matrix of the estimator with the expected accuracy estimate.

In exemplary situation (1), the estimated expected accuracy might be converging even though the position error might be diverging (due to the low number of observations). By converging, it is meant that the estimated expected accuracy at epoch t is smaller than the estimated expected accuracy at epoch t-1. It may therefore be desirable to check whether the expected accuracy given by the covariance matrix is indeed diverging. If so, the expected accuracy estimated at epoch t-1 may be ignored and replaced by the one computed at epoch t.

In exemplary situation (2), the covariance matrix produced by the estimator is usually more accurate than the computed expected accuracy so that it may be desirable to let the estimator use its own covariance matrix rather than adjusting it.

Before discussing further embodiments of the invention, let us now further explain, in section A below, the context in which some embodiments of the invention have been developed, for a better understanding thereof, as well as some technical considerations that may be helpful for understanding some embodiments of the invention and problems addressed by these embodiments.

A. Introduction to the context in which some embodiments of the invention have been developed

If GNSS observation errors are not completely modeled (for example because the errors are biased rather than following a white noise model, and these biases are not known), the expected positioning error produced by a Kalman filter does not necessarily reflect the positioning error itself. One way to address this would be to increase the number of error states modeled in the Kalman filter. However, this would lead to an increase in the computational complexity and possibly even a degradation in the positioning solution if the errors are poorly modeled. Some embodiments of the invention aim at avoiding these shortcomings. Namely, they use the Kalman filter's (or the like) residuals to estimate the expected accuracy, e.g. the expected positioning error, and they neither require any change to the error states of the estimator nor any increase in the number of error states thereof. These embodiments may therefore work without interfering with the Kalman filter or the positioning solution while delivering an expected accuracy which is superior to the one produced by the Kalman filter.

B. Further embodiments

Let us now describe further embodiments of the invention, together with considerations regarding how these embodiments may be implemented, for example, by software. In that context, reference is made to a so-called "covariance manager", which may be implemented as a set of computer-readable instructions. The covariance manager may for example be configured to be executed as part of, or in combination with, a positioning engine in accordance with reference [5], i.e. a positioning engine operating both a timely estimator and a precise estimator as described therein. The covariance manager may also be used with a different positioning engine than the one described in reference [5].

In one embodiment, the covariance manager uses the post-fit code observation and delta carrier phase observation residuals outputted by an estimator, which may for example be a timely estimator in accordance with reference [5], to compute the expected position error of the navigation solution produced by the estimator (see notably sections B.2 to B.4 and B.7 to B.10 below). The covariance manager may also compute a scale factor based on the residuals (see section B.12 below) to adjust the reported error produced by another estimator, which may for example be a precise estimator (but delayed) in accordance with reference [5].

B.1. Introduction to the covariance manager

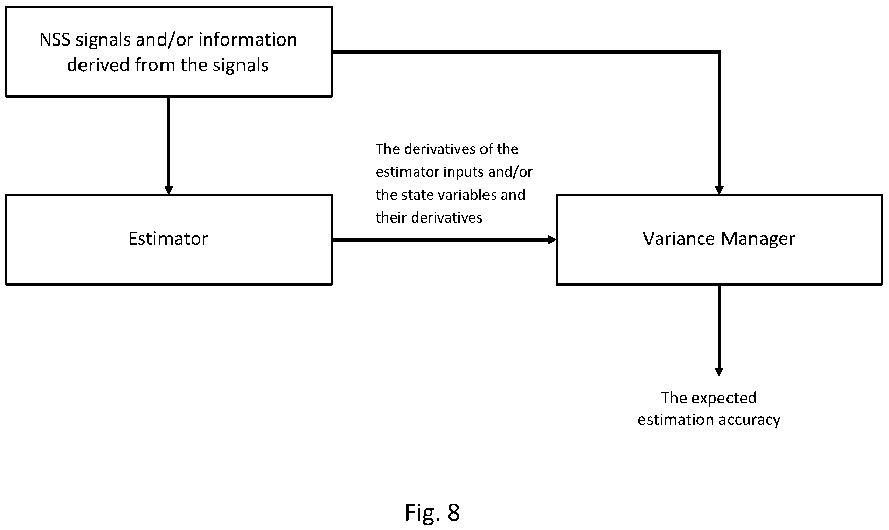

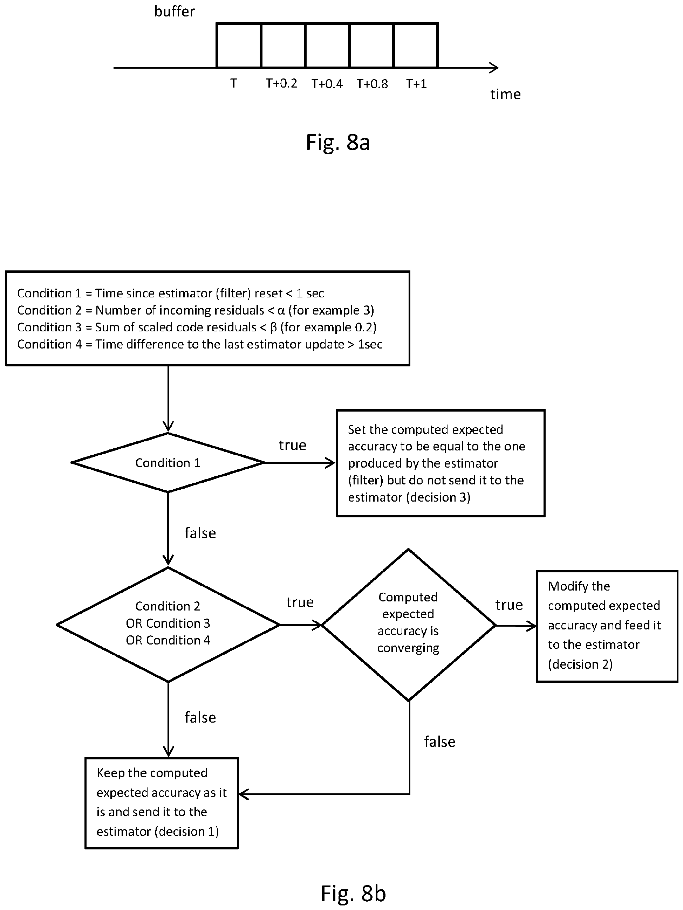

Fig. 8 schematically illustrates a system including a covariance manager (which is called "Variance Manager" in Fig. 8) in one embodiment of the invention. The covariance manager may use, for example, code observation residuals and delta carrier phase observation residuals to estimate an expected horizontal (or vertical) accuracy and then to compute a scale factor to be used to scale the timely estimator (TE) reported error, also known as "TE sigma".

In other words, the covariance manager may estimate an expected horizontal (or vertical) accuracy using the different residuals. It may then determine a scale factor that is suitable to force the horizontal (or vertical) accuracy (TE sigma) reported by the timely estimator to be equal to the estimated expected horizontal (or vertical) accuracy. The scale factor may be a single number (i.e., a scalar) to be used for multiplying some or all of the diagonal elements of the covariance matrix of the estimator.

B.2. Estimation of the expected accuracy

In one embodiment, the covariance manager estimates the horizontal (or vertical) error using a heuristic technique that is based on the idea that unmodeled measurement biases $b_y$ have the orthogonal decomposition (reference [6], pp. 689-691):

$$b_y = b_{\bar{y}} + b_{\bar{e}}$$

where $b_{\bar{y}}$ is the influential bias that is directly absorbed by the state vector and $b_{\bar{e}}$ is the testable bias that makes its way to the post-fit residuals. The terms "influential bias" and "testable bias" are known to the skilled person (see reference [6]).

The inventor has found that, in practice, the observation biases are typically split almost equally between the influential bias and the testable bias. From this, the inventor has inferred that a correlation between the observation residuals and the position error exists. On that basis, a scale factor was created to rectify the estimator's reported precision without interfering with the estimator state model and without affecting the estimator positioning performance. Using the residuals to rectify the reported precision was selected because (1) it has been found that a correlation exists between the residuals and the position error, and (2) using the residuals generally does not alter the estimator's performance.

B.3. The operation of the covariance manager in more detail

The method carried out by the system schematically illustrated by Fig. 8, which is in accordance with one embodiment of the invention, comprises receiving at least one of: (i) NSS signals from one or more NSS satellites and/or any combination of said signals, and (ii) information derived from these NSS signals, such as for example a stochastic model assigned to a NSS signal and/or correction data. This step of receiving is a possible implementation of step s10 as illustrated in Fig. 1.

The stochastic model may be based on various metrics such as for example signal-to-noise ratio (SNR), NSS satellite elevation, and/or noise estimation through a Kalman filter. Other metrics may be used as well.

The correction data may be obtained from various methods. In one embodiment, the information derived from said NSS signals comprises both a stochastic model and correction data. In one embodiment, the correction data includes at least one of: data representing an ionospheric model, data representing precise satellite clock information, data representing precise satellite orbit information, and data representing a tropospheric model.

The method carried out by the system schematically illustrated by Fig. 8 also comprises operating an estimation process, referred to as "estimator" (this step is a possible implementation of step s20 as illustrated in Fig. 1), and operating another process, hereinafter referred to as "covariance manager" (this step is a possible implementation of step s40 as illustrated in Fig. 1). The method comprises inputting the estimator's inputs and their derivatives in addition to the estimator's state variables and their derivatives into the covariance manager. For example, the estimator may send the post-fit residuals, also known as *a posteriori* residuals, to the covariance manager (this step is a possible implementation of step s30 as illustrated in Fig. 1). The post-fit residuals may pertain to the code observations, in which case they may be referred to as "code residuals", to the carrier phase observations, in which case they may be referred to as "carrier phase residuals", and/or to a combination of measurements such as the epoch-differenced carrier phase measurements, hereinafter referred to as "delta carrier phase residuals". Other combinations of measurements, i.e. observations, may be used as well.

The covariance manager may scale said residuals using the stochastic model derived from the received NSS signals and a mapping function of said model (this step is a possible implementation of step s35 as illustrated in Fig. 3). Specifically, the covariance manager may scale the *a posteriori* residuals using any of the aforementioned information derived from the NSS signals such as the SNR and/or the NSS satellite elevation.

The mapping function may be empirically derived and based on an exponentially decaying function of any of the aforementioned pieces of information. Alternatively, or additionally, the mapping function may be based on various activation functions such as: the logistic activation function, the rectified linear unit function, the linear activation function, or the Heaviside activation function. Other activation functions, or modified versions thereof, may be used as well.

The output of the covariance manager may be used in various ways. Three different implementations are presented in the following sections, namely an "estimator accuracy" implementation, a "residuals analysis" implementation, and a "covariance matrix feedback" implementation. Each of those implementations ultimately aims at computing, i.e. estimating, the expected accuracy of the estimator and, optionally, computing a scale factor to adjust the covariance matrix of the estimator. By "a scale factor to adjust the covariance matrix of the estimator", it is meant that the covariance manager produces a scalar value (one value) that may act as factor to multiply the diagonal elements, or some of the diagonal elements, of the covariance matrix. For example, let's assume that the scale factor $f$ produced by the covariance manager is equal to 2, i.e. $f = 2$, and the estimator covariance matrix is equal to

$$\begin{bmatrix} 2 & x1 & x2 \\ x1 & 1 & x3 \\ x3 & x3 & 3 \end{bmatrix}$$

where x1, x2, x3 may be values of little or no interest in a positioning application under consideration. Applying the scale factor $f$ to, for example, a Variance2D extracted from the covariance matrix yields:

$$Var2D\ extracted\ from\ matrix = 2*f + 1*f$$

B.4. The "estimator accuracy" implementation

In this implementation, the covariance manager smooths the code residuals in time by comparing them to the carrier phase residuals or the delta carrier phase residuals (this step is a possible implementation of step s37 as illustrated in Fig. 4 or step s33 as illustrated in Fig. 5). The covariance manager may for example smooth the code residuals in time using a Kalman filter (this filter being different from the Kalman filter which may be used to implement the above-discussed estimator), a moving average technique, or an exponential smoothing technique. Other smoothing techniques may be used.

The covariance manager may use a dynamically adjusted metric, empirically derived from the received post-fit residuals, to map the sum of the scaled residuals into a predicted estimation error.

In one embodiment, the covariance manager produces, using a dynamically adjusted metric, a scaling factor that is fed into the estimator to scale its covariance matrix.

In one embodiment, the covariance manager feeds the scaled residuals into a neural network to produce the predicted expected accuracy and, optionally, the covariance manager feeds a scaling factor into the estimator in order to scale its covariance matrix. The neural network may comprise, for example, an artificial neural network, a recurrent neural network, and/or a convolution neural network. In that respect, see discussion presented above *inter alia* with reference to Fig. 3a.

B.5. The "residual analysis" implementation

In this implementation, the residual change with time is analyzed by comparing the value of the residual at epoch t to the past. More specifically, in one embodiment, the covariance manager maintains a buffer with a predefined size. At each epoch the covariance manager processes the incoming residuals or the scaled residuals and produces an indicator (also referred to as "value of interest" in the following) out of said residuals. This step comprises, for example, deriving information from said residuals through linear or nonlinear combinations, and/or inputting the residuals into a Kalman filter (or another type of estimator) and deriving at least one value of interest from the residuals. In one embodiment, the value(s) of interest comprises at least one of: the sum of the scaled delta carrier phase residuals, the median of the residuals at a given epoch, the mean of the residuals at a given epoch, and the weighted sum of the residuals at a given epoch. Other values of interest may be alternatively or additionally derived and other processing techniques may be used as well.

Furthermore, the covariance manager may store a derived value of interest at each epoch in said buffer. Once the buffer reaches a predefined size, the covariance manager compares the newly derived value of interest at the current epoch to previous value of interest stored in the buffer. The covariance manager then empirically derives a scale factor (this step is a possible implementation of step s50 as illustrated in Fig. 6) that may be inputted to the estimator to adjust its covariance matrix.

As an example, a buffer having a size of 5 may be used. This means that it can hold five elements, i.e. five values, at any given time. This number may for example be appropriate if the estimator with which the covariance manager operates is running at a frequency of 5 Hz so that the buffer will be holding values stretching back 1 second in the past, as schematically illustrated by Fig. 8a.

B.6. The "covariance matrix feedback" implementation

In this implementation, the covariance manager receives, at each epoch, the covariance matrix from the estimator. It then compares the expected accuracy derived from the said covariance matrix to the value of interest derived in the "residual analysis" implementation, to the expected accuracy computed in the "estimator accuracy" implementation, and/or to a set of predefined criteria. Next, the covariance manager feeds the available information to a decision process (this process is a possible implementation of step s60 as illustrated in Fig. 7) yielding, for example, one of the four following decisions:

> 1) Keep the computed expected accuracy and/or the computed scale factor as it is and feed it to the estimator.
> 2) Modify the computed expected accuracy and/or the computed scale factor and feed it to the estimator.
> 3) Modify the computed expected accuracy and/or the computed scale factor but do not send it to the estimator.
> 4) Keep the computed expected accuracy and/or the computed scale factor as it is and do not send it to the estimator.

The decision process may for example comprise a decision tree based on multiple criteria, and/or a neural network. Other decision processes may be used.

An example for such a decision process is schematically illustrated in Fig. 8b, which may result in any one of decisions 1) to 3).

B.7. Acquisition of residuals, variances, and epoch time

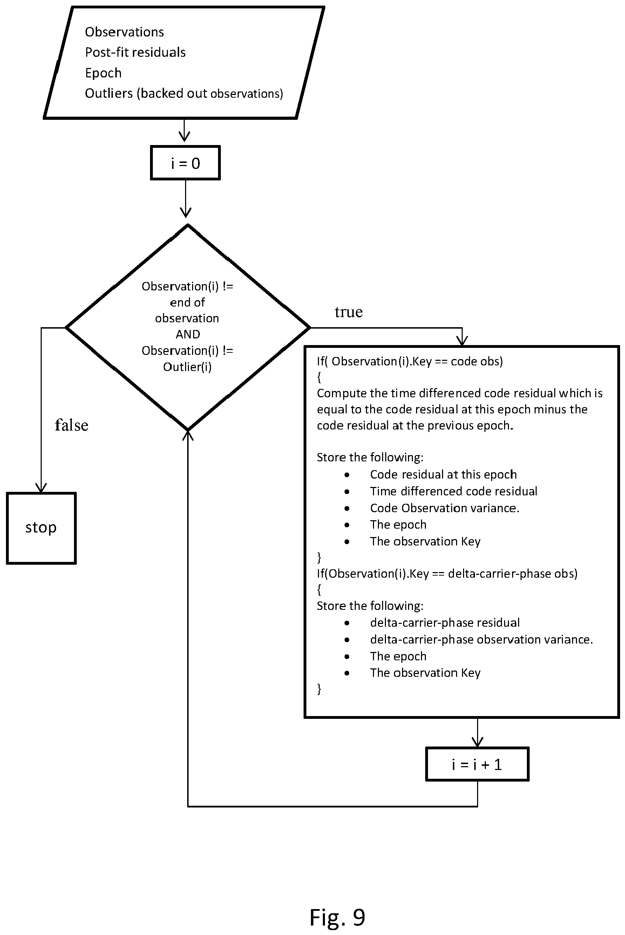

Fig. 9 is a flowchart of a procedure for acquiring residuals, variances, and epoch time, in one embodiment of the invention. This is an exemplary implementation of step s30 as illustrated in Fig. 1, where the residuals comprise, by way of example, code observations and delta carrier phase observations. The procedure may take various data as input arguments, such as for example the observations used by the estimator, the post-fit residuals, the current epoch time, and outliers (i.e., backed out observations).

The so-called "backed out" observations are observations that the estimator may have regarded as outliers and may have eliminated. The "backed out" observations (the removed observations) may be stored in a vector. The covariance manager may have access to this vector and, while acquiring the residuals, it may ignore the residual(s) pertaining to the removed observations (backed out observations).

Acquiring may for example be implemented by saving, i.e. storing, the data into a computer-implemented variable.

B.8. Procedure for scaling of delta carrier phase residuals

This procedure may scale each delta carrier phase residual using the corresponding delta carrier phase variance. This is an exemplary implementation of step s35 as illustrated in any of Figs. 3, 4, and 5. The scaled delta carrier phase residuals may then be summed up and stored, for example, in a computer-implemented variable.

Given a delta carrier phase residual $r_\varphi^k$ for channel $k$ (a channel being, for example, a combination of a satellite and a frequency, a combination of satellite, a band, a signal, and a modulation type, or any other suitable combination), and having a standard deviation $\sigma_\varphi^k$, the scaled delta carrier phase residual may be computed as follows:

$$\bar{r}_\varphi^k = \left| r_\varphi^k \right| * e^{-\alpha * \sigma_\varphi^k}$$

where $\alpha$ is a preset factor, which may for example be determined empirically. An exemplary way of setting the value of $\alpha$ may be as follows:

- The value of $\alpha$ should be selected so that the term $e^{-\alpha * \sigma_\varphi^k}$ should be larger than 0.5 if $\sigma_\varphi^k$ falls into a range considered to be indicative of a good quality signal.

- The value of $\alpha$ should also be selected so that the term $e^{-\alpha * \sigma_\varphi^k}$ should be smaller than 0.5 if $\sigma_\varphi^k$ falls into a range considered to be indicative of a bad quality signal.

- The determination as to whether a signal is a good or bad quality signal may for example depend on the receiver, the application, and/or the environment in which the NSS signal is acquired.

- The following relationship may for example be adopted for determining whether a signal is a good or bad quality signal:

$$\begin{cases} \sigma_\varphi^k \in [0.01 \text{ meters}, \ 1 \text{ meters}] \rightarrow good\ quality \\ \sigma_\varphi^k \in [5 \text{ meters}, \ \gg 5 \text{ meters}] \rightarrow bad\ quality \end{cases}$$

- In view of the above considerations, a choice of $\alpha = 0.5$ may be reasonable. Other values may, however, be selected.

Other ways of setting the value of $\alpha$ may be suitable as well.

In other words, the delta carrier phase residuals may be mapped to a scaling value as illustrated in the exemplary plot of Fig. 10. Using this exemplary mapping function, delta carrier phase residuals associated with NSS observations having a relatively small variance are subject to a large scaling because those NSS observations are regarded as trustworthy NSS observations. In contrast, delta carrier phase residuals associated with NSS observations having a large variance are subject to a small scaling because those NSS observations are regarded as less trustworthy NSS observations. Finally, the scaled delta carrier phase residuals may then be summed up and stored, for example, in a computer-implemented variable.

A similar procedure may be implemented for scaling the code residuals and any other residuals that is to be scaled.

B.9. Procedure for smoothing of the code residuals

This procedure smooths each code residual using the corresponding delta carrier phase residual. (The corresponding delta carrier phase residual is the residual having the same satellite, channel, and epoch as the code residual.) This corresponds to a possible implementation of step s37 or step s33 as illustrated in Figs. 4 and 5 respectively.

The smoothing process may for example be based on the following formula:

$$\overline{r_\rho^t} = \overline{r_\rho^{t-1}} + \frac{1}{\gamma}\left|\Delta r_\rho^t\right| + \left(1 - \frac{1}{\gamma}\right) * r_\varphi^t$$

where:

$\overline{r_\rho^t}$ is the smoothed code residual at epoch $t$;

$\overline{r_\rho^{t-1}}$ is the smoothed code residual at epoch $t$ - 1 (Note: at the very first epoch, the term $\overline{r_\rho^{t-1}}$ is equal to the unsmoothed code residual);

$\Delta r_\rho^t$ is the delta code residual between epoch $t$ and $t$ - 1;

$\gamma$ is a smoothing coefficient, specific to each channel, and incremented at each epoch by 1. Its upper bound may be predetermined. When the delta carrier phase residual does not exist due to an outage or a cycle slip in the carrier phase observations, the smoothing coefficient is reset to 1 (which is its initial value); and

$r_\varphi^t$ is the delta carrier phase residual at epoch $t$.

In one embodiment, the upper bound of the smoothing coefficient $\gamma$ is determined as follows: The larger smoothing coefficient $\gamma$, the smoother $\overline{r_\rho^t}$ will be. By "smooth", it is meant less noisy. The value of the upper bound of smoothing coefficient $\gamma$ may be determined empirically based on the desirable outcome, for example by comparing the estimated expected accuracy and the actual estimation error for a large data set. In one embodiment, the upper bound of smoothing coefficient $\gamma$ is set to 3. In one embodiment, the upper bound of smoothing coefficient $\gamma$ is set to a value in the range from 2 to 10, i.e. [2 ; 10].

The invention is not limited by the above exemplary formula (and the same applies to other formulas presented throughout the description). In particular, other formulas, mathematical expressions, procedures, or the like may be used for realizing the smoothing.

B.10. Procedure for estimating the variance, i.e. for estimating the expected accuracy

This procedure aims at estimating, i.e. computing, the expected horizontal (or vertical) position sigma, i.e. the expected accuracy of the positioning solution produced by the estimator. The computed value may be regarded as constituting a bound rather than an accurate position error and it may be based on the scaled and smoothed code residuals, as computed earlier (see above sections B.8 and B.9).

The procedure starts by computing a degree of freedom (DOF) according to the following sub-procedure:

1. IF *UsedResiduals* ≤ *number of estimator states*

$$DOF = 1.1 - \frac{1}{(1 + 0.01 * UsedResiduals^2)^2}$$

2. ELSE

$$DOF = UsedResiduals - number\ of\ estimator\ states$$

where

the value *UsedResiduals* is the number of code residuals acquired by the above-described procedure for acquiring residuals, variances, and epoch time (see above section B.7); and
the value *number of estimator states* may be preset and is the number of states of the estimator.

The first DOF equation (i.e., in the above "IF" branch, numbered "1.") produces a value smaller than 1.0 in order to upscale the horizontal (or vertical) position sigma that will be computed later on. This is useful especially when the estimator is running an underdetermined system where the number of estimator states exceeds the number of observations. The exemplary plot of Fig. 11 shows the DOF values obtained from the first DOF equation. It reflects the finding that the more information is available, the less the expected accuracy is to be upscaled, considering the high confidence associated with a large number of residuals. The curve smoothly transitions from a minimum value of 0.1 DOF and stays below a value of 1 DOF for most of the "Number of used residuals" values. This avoids a sudden spike and at the same time achieves the desired upscaling.
After the DOF is available, the un-smoothed sigma (i.e. the expected horizontal error, or vertical error) may be computed as follows:

$$\sigma = \sum_{k=1}^{K} \frac{\bar{r}_\rho^k}{DOF}$$

The next step may then be optionally to smooth the computed sigma in time using the following equation:

$$\overline{\sigma_t} = coeff * \sigma_t + (1 - coeff) * \overline{\sigma_{t-1}}$$

where:

$\overline{\sigma_t}$ is the smoothed sigma, or, in other words, the expected accuracy, at epoch t;
$\overline{\sigma_{t-1}}$ is the smoothed sigma at epoch $t$ - 1; and
*coeff* is the smoothing coefficient.

The smoothing coefficient *coeff* may for example be computed as follows:

1. IF the time since the last reset of the estimator (for example due to a temporary absence of observations) is less than 4 seconds or if the time since the last outage is less than 2 seconds, ensure a relatively slow but smooth sigma convergence by setting:

$$coeff = 0.01$$

2. ELSE

$$coeff = \frac{\Delta t}{timeSinceOutage}$$

where $\Delta t$ is the time difference between two consecutive covariance manager initiations, and the value *timeSinceOutage* is not allowed to exceed a predefined threshold. The value *timeSinceOutage* is increasing with every epoch after the outage. Its value is capped, otherwise smoothing coefficient *coeff* would become infinitesimal small. For example, the threshold may be set to "2". Other values may be selected for example considering update rate $\Delta t$.

A neural network may also be used to compute the expected accuracy, as explained above with reference to Fig. 3a.

B.11. Procedure for adjusting the covariance matrix

This procedure adjusts the smoothed sigma computed in the procedure for estimating the variance (see above section B.10) using the expected accuracy obtained from the estimator covariance matrix. This is especially useful during the following conditions (i) and (ii):

(i) An estimator reset (see also condition 1 in Fig. 8b)

When an estimator reset occurs (for example because the estimator is operated in a NSS receiver attached to a vehicle, which drives through a tunnel and then exits the tunnel), the number of incoming observations, as well as residuals, during the first few epochs after the reset may be low. This may lead to an overoptimistic sigma computed by the covariance manager. As a mitigation measure, when the time since reset is less than a predetermined threshold, the sigma computed locally may be set to be equal to the one obtained from the estimator covariance. In other words, in one embodiment, the estimator original sigma (obtained from the estimator covariance) is not scaled during a period of time after a reset.

(ii) Low number of observations or observation outage

In one embodiment,

IF

(a) the number of residuals outputted by the covariance manager is less than a predefined threshold (see also condition 2 in Fig. 8b), or (b) the sum of the scaled code residuals, $\sum_{k=1}^{K} \bar{r}_{\rho}^{k}$ , is less than a predefined threshold (see also condition 3 in Fig. 8b), or (c) $\Delta t$ , i.e. the difference between current and previous processing epochs, is larger than a predefined threshold (see also condition 4 in Fig. 8b),

THEN the locally computed sigma is upscaled by an amount equal to the absolute value of the change in the computed sigma between the current and the previous epoch plus the absolute change in the estimator sigma between the current and the previous epoch.

B.12. Procedure for computing a scale factor

This procedure produces a scale factor that may be used by the timely estimator to scale the covariance of the incoming precise estimator integer ambiguity position solution (as explained in reference [5]). The scale factor has a lower bound of 1 to avoid scaling down the covariance. It has also an upper bound that may be preset. The technique may be described in mathematical terms as follows:
At each epoch, the sum of the delta carrier phase residuals is divided by the total number of channels, $K$:

$$\phi_t = \sum_{k=1}^{K} \frac{\bar{r}_{\varphi}^{k}}{K}$$

The value $\phi$ is stored in a moving window whose size may be preset. Let us assume, for the sake of explanation and as an example, that the window size is five. After five epochs, the moving window thus looks like this:

| $\phi_{t-5}$ | $\phi_{t-4}$ | $\phi_{t-3}$ | $\phi_{t-2}$ | $\phi_{t-1}$ |
|---|---|---|---|---|
| $t-5$ | $t-4$ | $t-3$ | $t-2$ | $t-1$ |

Thus, none of the window elements belongs to the current epoch $t$. This is because the value $\phi_t$ may be pushed to the window at the end of this procedure, after the scaling factor is computed.

Once all the elements of the window are populated, their average value is computed:

$$\bar{\phi} = \sum_{i=1}^{5} \frac{\phi_{t-i}}{5}$$

If the value $\phi$ is greater than zero, the following ratio is computed:

$$\lambda_t = \frac{\phi_t}{\bar{\phi}}$$

Thereafter, the delta-carrier-phase-based scale factor is computed according to the following sub-procedure:

1. IF $\lambda_t > \lambda_{t-1}$

$$scaleFactor_t = \lambda_t$$

2. IF $\lambda_t < \lambda_{t-1}$

$$scaleFactor_t = \omega * scaleFactor_{t-1} + (1 - \omega) * \lambda_t$$

3. ELSE

$$scaleFactor_t = 1$$

where:
$\omega$ is a preset smoothing factor with the range $0 \leq \omega < 1$ ($\omega = 0$ means that no smoothing is performed).

C. System

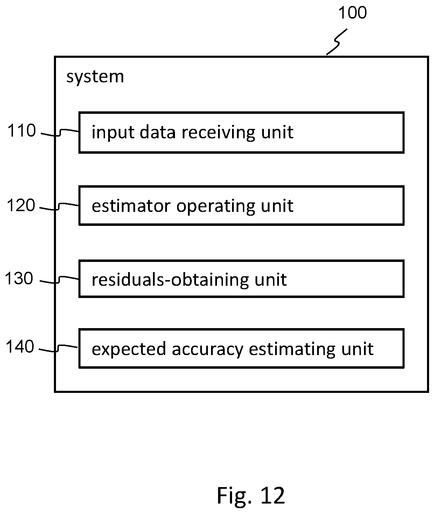

Fig. 12 schematically illustrates a system 100 in one embodiment of the invention. System 100 comprises an NSS receiver and/or a processing entity capable of receiving data from the NSS receiver. The system operates to estimate parameters derived from NSS signals useful to, i.e. suitable to, determine a position, and to estimate an expected accuracy for an application relying on NSS observations to produce an estimate of said parameters or a combination thereof. The NSS receiver is configured for observing an NSS signal from each of a plurality of NSS satellites over multiple epochs. System 100 comprises an input data receiving unit 110, an estimator operating unit 120, a residuals-obtaining unit 130, and an expected accuracy estimating unit 140. Input data receiving unit 110 is configured for receiving input data comprising at least one of: NSS signals observed by the NSS receiver, and information derived from said NSS signals. Estimator operating unit 120 is configured for operating an estimation process, hereinafter referred to as "estimator", wherein the estimator uses state variables and computes the values of its state variables at least based on the received input data. Residuals-obtaining unit 130 is configured for obtaining residuals from the estimator, each residual being associated with at least one NSS signal observed by the NSS receiver. More specifically, precise-observations residuals and less-precise-observations residuals are obtained from the estimator, as defined above. Expected accuracy estimating unit 140 is configured for estimating an expected accuracy based on at least one of: (i) a combination of at least some of the obtained precise-observations residuals and at least some of the obtained less-precise-observations residuals and (ii) information derived from a combination of at least some of the obtained precise-observations residuals and at least some of the obtained less-precise-observations residuals.

In one embodiment, a vehicle comprises a system 100 as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. The vehicle may for example be a car, a truck, a bus, a motorcycle, a tractor, a combine harvester, a crop sprayer, a construction equipment, or a train. Exemplary applications may include machine guidance, construction work, operation of unmanned aerial vehicles (UAV), also known as drones, and operation of unmanned surface vehicles/vessels (USV).

Additional remarks

Any of the above-described methods and their embodiments may be implemented, at least partially, by means of a computer program. The computer program may be loaded on an apparatus, such as for example an NSS receiver (running on a rover station, on a reference station, or within a vehicle) or a server (which may comprise one or a plurality of computers). Therefore, the invention also relates, in some embodiments, to a computer program, which, when carried out on an apparatus as described above, such as for example an NSS receiver (running on a rover station, on a reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and apparatuses.

NSS receivers may include an antenna, configured to receive the signals at the frequencies broadcasted by the satellites, processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "input data receiving unit", "estimator operating unit", "residuals obtaining unit", "expected accuracy estimating unit", and the like are used herein as units (or sub-units) of an apparatus (such as an NSS receiver), no restriction is made regarding how distributed the constituent parts of a unit (or sub-unit) may be. That is, the constituent parts of a unit (or sub-unit) may be distributed in different software or hardware components or devices for bringing about the intended function. Further, the units may be gathered together for performing their functions by means of a combined, single unit (or sub-unit).

The above-mentioned units and sub-units may be implemented using hardware, software, a combination of hardware and software, pre-programmed ASICs (application-specific integrated circuit), etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

BDS     BeiDou Navigation Satellite System
C/A     coarse/acquisition (code)
CPU     central processing unit
DOF     degree of freedom
GNSS    global navigation satellite system
GPS     Global Positioning System
IP      Internet Protocol
NAVIC   NAVigation with Indian Constellation
NSS     navigation satellite system
PRN     pseudo-random number
QZSS    Quasi-Zenith Satellite System

RAM    random-access memory
RNSS    regional navigation satellite system
ROM    read-only memory
RTK    real-time kinematic
SNR    signal-to-noise ratio
TE    timely estimator

References:

[1] Hofmann-Wellenhof, B., et al., GNSS, Global Navigation Satellite Systems, GPS, GLONASS, Galileo, & more, Springer-Verlag Wien, 2008.

[2] EP 3 035 080 A1 titled "Navigation satellite system positioning involving the generation of correction information" (Trimble ref.: A4396)

[3] EP 3 130 943 A1 titled "Navigation satellite system positioning involving the generation of tropospheric correction information" (Trimble ref.: 15072-EPO)

[4] EP 3 792 665 A1 titled "Protection level generation methods and systems for applications using navigation satellite system (NSS) observations" (Trimble ref.: 19019-EP)

[5] EP 3 293 549 A1 titled "Advanced navigation satellite system positioning method and system using delayed precise information" (Trimble ref.: 16029-IDF)

[6] Teunissen, P., & Montenbruck, O. (Eds.). (2017). Springer handbook of global navigation satellite systems. Springer.

[7] Geron, A. (2019). Hands-On Machine Learning with Scikit-Learn, Keras, and TensorFlow: Concepts, Tools, and Techniques to Build Intelligent Systems. O'Reilly Media, Inc.

[8] Christian C.J.M. Tiberius and Frank Kenselaar. "Estimation of the stochastic model for GPS code and phase observables". In: Survey Review 35.277 (2000), pp. 441-454.

[9] Xiaoguang Luo. GPS stochastic modelling: signal quality measures and ARMA processes. Springer Science & Business Media, 2013.

[10] H. Hartinger and Fritz K. Brunner. "Variances of GPS phase observations: the SIGMA-$\varepsilon$ model". In: GPS solutions 2.4 (1999), pp. 35-43.

[11] Heidi Kuusniemi. User-level reliability and quality monitoring in satellite-based personal navigation. Tampere University of Technology, 2005.

**Claims**

1. Method, carried out by at least one of a navigation satellite system receiver, hereinafter abbreviated as "NSS receiver", and a processing entity capable of receiving data from the NSS receiver, for estimating parameters useful to determine a position, the NSS receiver observing a NSS signal from each of a plurality of NSS satellites over multiple epochs, the method comprising:

receiving (s10) input data comprising at least one of: NSS signals observed by the NSS receiver, and information derived from said NSS signals;

operating (s20) an estimation process, hereinafter referred to as "estimator", wherein the estimator uses state variables and computes the values of its state variables at least based on the received input data;

obtaining (s30) first residuals, hereinafter referred to as "precise-observations residuals", and second residuals, hereinafter referred to as "less-precise-observations residuals", from the estimator, each residual being associated with at least one NSS signal observed by the NSS receiver, wherein:

the precise-observations residuals comprise at least one of: carrier phase observation residuals, delta carrier phase observation residuals, and Doppler observation residuals; and

the less-precise-observations residuals comprise at least one of: code observation residuals and delta code observation residuals; and

estimating (s40) an expected accuracy of at least one of a position and a velocity, wherein estimating the expected accuracy is based on at least one of:

a combination of at least some of the obtained precise-observations residuals and at least some of the obtained less-precise-observations residuals, and

information derived from a combination of at least some of the obtained precise-observations residuals and at least some of the obtained less-precise-observations residuals.

**2.** Method of claim 1, wherein estimating (s40) the expected accuracy comprises:
applying a non-linear mapping function to a linear combination of at least some of the obtained precise-observations residuals and at least some of the obtained less-precise-observations residuals, the mapping function being a function of the number of received residuals.

**3.** Method according to any one of the preceding claims, wherein the estimator comprises at least one of a Kalman filter and a least squares estimator.

**4.** Method according to any one of the preceding claims, further comprising, after obtaining the precise-observations residuals and the less-precise-observations residuals and before estimating the expected accuracy:

for each of at least some of the obtained residuals, scaling (s35) the residual based on a stochastic model, the stochastic model applying to the at least one NSS signal with which the residual is associated;
wherein estimating (s40) the expected accuracy then comprises estimating the expected accuracy based on at least one of: the scaled residuals and information derived from the scaled residuals.

**5.** Method of claim 4, further comprising at least one of:

after scaling the obtained residuals and before estimating the expected accuracy, smoothing (s37) the scaled residuals in time; and
after obtaining the residuals and before scaling the residuals, smoothing (s33) the residuals in time.

**6.** Method according to any one of the preceding claims, wherein the expected accuracy comprises at least one of:

an expected horizontal error on or near the Earth surface;
an expected vertical error on or near the Earth surface; and
an expected three-dimensional error on or near the Earth surface.

**7.** Method according to any one of the preceding claims, further comprising:
computing (s50) a scale factor based on at least one of: the residuals and information derived from the residuals.

**8.** Method of claim 7, wherein the estimator outputs, at each epoch, a covariance matrix, and the method further comprising:
determining (s60) whether to change the covariance matrix of the estimator using a decision procedure taking the estimated expected accuracy and the computed scale factor as input.

**9.** System comprising at least one of a navigation satellite system receiver, hereinafter abbreviated as "NSS receiver", and a processing entity capable of receiving data from the NSS receiver, the system being for estimating parameters useful to determine a position, the NSS receiver being configured for observing a NSS signal from each of a plurality of NSS satellites over multiple epochs, and the system being configured for:

receiving input data comprising at least one of: NSS signals observed by the NSS receiver, and information derived from said NSS signals;
operating an estimation process, hereinafter referred to as "estimator", wherein the estimator uses state variables and computes the values of its state variables at least based on the received input data;
obtaining first residuals, hereinafter referred to as "precise-observations residuals", and second residuals, hereinafter referred to as "less-precise-observations residuals", from the estimator, each residual being associated with at least one NSS signal observed by the NSS receiver, wherein:

the precise-observations residuals comprise at least one of: carrier phase observation residuals, delta carrier phase observation residuals, and Doppler observation residuals; and
the less-precise-observations residuals comprise at least one of: code observation residuals and delta code observation residuals; and

estimating an expected accuracy of at least one of a position and a velocity, wherein estimating the expected accuracy is based on at least one of:

a combination of at least some of the obtained precise-observations residuals and at least some of the obtained less-precise-observations residuals, and
information derived from a combination of at least some of the obtained precise-observations residuals and at least some of the obtained less-precise-observations residual.

10. Vehicle comprising a system according to claim 9, the vehicle preferably being at least one of: a motor vehicle, an agricultural tractor, a combine harvester, a crop sprayer, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

11. Computer program or set of computer programs comprising computer-readable instructions configured, when executed on a computer or set of computers, to cause the computer or set of computers to carry out the method according to any one of claims 1 to 8.

12. Computer program product or storage mediums comprising a computer program or set of computer programs according to claim 11.

**Amended claims in accordance with Rule 137(2) EPC.**

1. Method, carried out by at least one of a navigation satellite system receiver, hereinafter abbreviated as "NSS receiver", and a processing entity capable of receiving data from the NSS receiver, for estimating parameters useful to determine a position, the NSS receiver observing a NSS signal from each of a plurality of NSS satellites over multiple epochs, the method comprising:

receiving (s10) input data comprising at least one of: NSS signals observed by the NSS receiver, and information derived from said NSS signals; and
operating (s20) an estimation process, hereinafter referred to as "estimator", wherein the estimator uses state variables and computes the values of its state variables at least based on the received input data;

the method being **characterized by** further comprising:

obtaining (s30) first residuals, hereinafter referred to as "precise-observations residuals", and second residuals, hereinafter referred to as "less-precise-observations residuals", from the estimator, each residual being associated with at least one NSS signal observed by the NSS receiver, wherein:

the precise-observations residuals comprise at least one of: carrier phase observation residuals, delta carrier phase observation residuals, and Doppler observation residuals; and
the less-precise-observations residuals comprise at least one of: code observation residuals and delta code observation residuals; and

estimating (s40) an expected accuracy of at least one of a position and a velocity, wherein estimating the expected accuracy is based on at least one of:

a combination of at least some of the obtained precise-observations residuals and at least some of the obtained less-precise-observations residuals, and
information derived from a combination of at least some of the obtained precise-observations residuals and at least some of the obtained less-precise-observations residuals.

2. Method of claim 1, wherein estimating (s40) the expected accuracy comprises:
applying a non-linear mapping function to a linear combination of at least some of the obtained precise-observations residuals and at least some of the obtained less-precise-observations residuals, the mapping function being a function of the number of received residuals.

3. Method according to any one of the preceding claims, wherein the estimator comprises at least one of a Kalman filter and a least squares estimator.

4. Method according to any one of the preceding claims, further comprising, after obtaining the precise-observations residuals and the less-precise-observations residuals and before estimating the expected accuracy:

for each of at least some of the obtained residuals, scaling (s35) the residual based on a stochastic model, the stochastic model applying to the at least one NSS signal with which the residual is associated; wherein estimating (s40) the expected accuracy then comprises estimating the expected accuracy based on at least one of: the scaled residuals and information derived from the scaled residuals.

5. Method of claim 4, further comprising at least one of:

after scaling the obtained residuals and before estimating the expected accuracy, smoothing (s37) the scaled residuals in time; and
after obtaining the residuals and before scaling the residuals, smoothing (s33) the residuals in time.

6. Method according to any one of the preceding claims, wherein the expected accuracy comprises at least one of:

an expected horizontal error on or near the Earth surface;
an expected vertical error on or near the Earth surface; and
an expected three-dimensional error on or near the Earth surface.

7. Method according to any one of the preceding claims, further comprising:
computing (s50) a scale factor based on at least one of: the residuals and information derived from the residuals.

8. Method of claim 7, wherein the estimator outputs, at each epoch, a covariance matrix, and the method further comprising:
determining (s60) whether to change the covariance matrix of the estimator using a decision procedure taking the estimated expected accuracy and the computed scale factor as input.

9. System comprising at least one of a navigation satellite system receiver, hereinafter abbreviated as "NSS receiver", and a processing entity capable of receiving data from the NSS receiver, the system being for estimating parameters useful to determine a position, the NSS receiver being configured for observing a NSS signal from each of a plurality of NSS satellites over multiple epochs, and the system being configured for:

receiving input data comprising at least one of: NSS signals observed by the NSS receiver, and information derived from said NSS signals; and
operating an estimation process, hereinafter referred to as "estimator", wherein the estimator uses state variables and computes the values of its state variables at least based on the received input data;

the system being **characterized by** being further configured for:

obtaining first residuals, hereinafter referred to as "precise-observations residuals", and second residuals, hereinafter referred to as "less-precise-observations residuals", from the estimator, each residual being associated with at least one NSS signal observed by the NSS receiver, wherein:

the precise-observations residuals comprise at least one of: carrier phase observation residuals, delta carrier phase observation residuals, and Doppler observation residuals; and
the less-precise-observations residuals comprise at least one of: code observation residuals and delta code observation residuals; and

estimating an expected accuracy of at least one of a position and a velocity, wherein estimating the expected accuracy is based on at least one of:

a combination of at least some of the obtained precise-observations residuals and at least some of the obtained less-precise-observations residuals, and
information derived from a combination of at least some of the obtained precise-observations residuals and at least some of the obtained less-precise-observations residual.

**10.** Vehicle comprising a system according to claim 9, the vehicle preferably being at least one of: a motor vehicle, an agricultural tractor, a combine harvester, a crop sprayer, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

**11.** Computer program or set of computer programs comprising computerreadable instructions configured, when executed on a computer or set of computers, to cause the computer or set of computers to carry out the method according to any one of claims 1 to 8.

**12.** Computer program product or storage mediums comprising a computer program or set of computer programs according to claim 11.

Fig. 2a

- s6 — observing NSS signals
- s10 — receiving input data
- s20 — operating estimator
- s30 — obtaining residuals
- s40 — estimating expected accuracy

Fig. 1

- s10 — receiving input data
- s20 — operating estimator
- s30 — obtaining residuals
- s40 — estimating expected accuracy

s10 — | receiving input data from an external NSS receiver |

↓

s20 — | operating estimator |

↓

s30 — | obtaining residuals |

↓

s40 — | estimating expected accuracy |

**Fig. 2b**

s10 — | receiving input data |

↓

s20 — | operating estimator |

↓

s30 — | obtaining residuals |

↓

s35 — | scaling residuals |

↓

s40 — | estimating expected accuracy |

**Fig. 3**

Fig. 3a

Fig. 5

s10 — receiving input data
s20 — operating estimator
s30 — obtaining residuals
s33 — smoothing residuals
s35 — scaling residuals
s40 — estimating expected accuracy

Fig. 4

s10 — receiving input data
s20 — operating estimator
s30 — obtaining residuals
s35 — scaling residuals
s37 — smoothing scaled residuals
s40 — estimating expected accuracy

EP 4 166 990 A1

s10 — receiving input data

↓

s20 — operating estimator

↓

s30 — obtaining residuals

↓

s40 — estimating expected accuracy

↓

s50 — computing scale factor

**Fig. 6**

s10 — receiving input data

↓

s20 — operating estimator

↓

s30 — obtaining residuals

↓

s40 — estimating expected accuracy

↓

computing scale factor — s50

↓

s60 — determining whether to change the covariance matrix of the estimator

**Fig. 7**

Fig. 8

Variance Manager

Estimator

NSS signals and/or information derived from the signals

The derivatives of the estimator inputs and/or the state variables and their derivatives

The expected estimation accuracy

buffer

| | | | | |
| T | T+0.2 | T+0.4 | T+0.8 | T+1 |

time

## Fig. 8a

Condition 1 = Time since estimator (filter) reset < 1 sec
Condition 2 = Number of incoming residuals < α (for example 3)
Condition 3 = Sum of scaled code residuals < β (for example 0.2)
Condition 4 = Time difference to the last estimator update > 1sec

Condition 1 → true → Set the computed expected accuracy to be equal to the one produced by the estimator (filter) but do not send it to the estimator (decision 3)

false

Condition 2 OR Condition 3 OR Condition 4 → true → Computed expected accuracy is converging → true → Modify the computed expected accuracy and feed it to the estimator (decision 2)

false

false

Keep the computed expected accuracy as it is and send it to the estimator (decision 1)

## Fig. 8b

Observations
Post-fit residuals
Epoch
Outliers (backed out observations)

i = 0

Observation(i) !=
end of
observation
AND
Observation(i) !=
Outlier(i)

true

false

stop

If( Observation(i).Key == code obs)
{
Compute the time differenced code residual which is
equal to the code residual at this epoch minus the
code residual at the previous epoch.

Store the following:
- Code residual at this epoch
- Time differenced code residual
- Code Observation variance.
- The epoch
- The observation Key
}
If(Observation(i).Key == delta-carrier-phase obs)
{
Store the following:
- delta-carrier-phase residual
- delta-carrier-phase observation variance.
- The epoch
- The observation Key
}

i = i + 1

Fig. 9

Fig. 10

Fig. 11

100

system

110 — input data receiving unit

120 — estimator operating unit

130 — residuals-obtaining unit

140 — expected accuracy estimating unit

Fig. 12

Europäisches
Patentamt

European
Patent Office

Office européen
des brevets

# EUROPEAN SEARCH REPORT

**Application Number**

EP 21 20 2395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/150389 A1 (NAVCOM TECH INC [US]; DAI LIWEN L [US] ET AL.) 11 December 2008 (2008-12-11) * fig. 3, par. 28, 31, 37 * ----- | 1-12 | INV. G01S19/39 |
| X,D | EP 3 792 665 A1 (TRIMBLE INC [US]) 17 March 2021 (2021-03-17) * par. 57, 61, 63 * ----- | 1-12 | |

**TECHNICAL FIELDS SEARCHED (IPC)**

G01S

The present search report has been drawn up for all claims

| Place of search | Date of completion of the search | Examiner |
|---|---|---|
| Munich | 29 April 2022 | González Moreno, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 2395

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2022

| Patent document cited in search report | | Publication date | Patent family member(s) | | Publication date |
|---|---|---|---|---|---|
| WO 2008150389 | A1 | 11-12-2008 | AU | 2008260578 A1 | 11-12-2008 |
| | | | AU | 2008260579 A1 | 11-12-2008 |
| | | | BR | PI0811192 A2 | 29-10-2014 |
| | | | BR | PI0811194 A2 | 13-09-2011 |
| | | | CA | 2681918 A1 | 11-12-2008 |
| | | | CA | 2687352 A1 | 11-12-2008 |
| | | | CN | 101680943 A | 24-03-2010 |
| | | | CN | 101680944 A | 24-03-2010 |
| | | | EP | 2156213 A1 | 24-02-2010 |
| | | | EP | 2156214 A1 | 24-02-2010 |
| | | | JP | 5421903 B2 | 19-02-2014 |
| | | | JP | 2010528320 A | 19-08-2010 |
| | | | JP | 2010528321 A | 19-08-2010 |
| | | | RU | 2009149366 A | 10-07-2011 |
| | | | RU | 2009149397 A | 10-07-2011 |
| | | | WO | 2008150389 A1 | 11-12-2008 |
| | | | WO | 2008150390 A1 | 11-12-2008 |
| EP 3792665 | A1 | 17-03-2021 | EP | 3792665 A1 | 17-03-2021 |
| | | | US | 2021072407 A1 | 11-03-2021 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1
- EP 3130943 A1
- EP 3792665 A1
- EP 3293549 A1

**Non-patent literature cited in the description**

- **HOFMANN-WELLENHOF, B. et al.** GNSS, Global Navigation Satellite Systems, GPS, GLONASS, Galileo, & more. Springer-Verlag, 2008
- Springer handbook of global navigation satellite systems. Springer, 2017
- **GERON, A.** Hands-On Machine Learning with Scikit-Learn, Keras, and TensorFlow: Concepts, Tools, and Techniques to Build Intelligent Systems. O'Reilly Media, Inc, 2019
- **CHRISTIAN C.J.M. ; TIBERIUS ; FRANK KENSELAAR.** Estimation of the stochastic model for GPS code and phase observables. *Survey Review,* 2000, vol. 35.277, 441-454
- **XIAOGUANG LUO.** GPS stochastic modelling: signal quality measures and ARMA processes. Springer Science & Business Media, 2013
- **H. HARTINGER ; FRITZ K. BRUNNER.** Variances of GPS phase observations: the SIGMA-$\varepsilon$ model. *GPS solutions,* 1999, vol. 2.4, 35-43
- **HEIDI KUUSNIEMI.** User-level reliability and quality monitoring in satellite-based personal navigation. Tampere University of Technology, 2005